# EUROPEAN PATENT SPECIFICATION

(11) **EP 0 985 675 B1**
(45) Date of publication and mention of the grant of the patent: **30.11.2005**
(21) Application number: 99117415.2
(22) Date of filing: 07.09.1999
(51) Int. Cl.: C07F 7/18

(54) **High yield hydrosilation process**
Hydrosilylierungsverfahren mit hoher Ausbeute
Procédé d'hydrosilylation à rendement élevé

(30) Priority: 11.09.1998 US 151642
(43) Date of publication of application: 15.03.2000
(73) Proprietor: GENERAL ELECTRIC COMPANY, Schenectady, NY 12345 (US)
(72) Inventor: Schilling, Curtis Louis Jr., Marietta, Ohio 45750 (US); Burns, Patrick James, Parkersburg, West Virginia 29101 (US); Ritscher, James Stephen, Marietta, Ohio 45750 (US); Bowman, Mark Paul, Marietta, Ohio 45750 (US); Childress, Thomas Edgeworth, Newport, Ohio 45768 (US); Powell, Michael Ray, New Martinsville, West Virginia 26155 (US); Graban, Eric Michael, Marietta, Ohio 45750 (US)
(74) Representative: Wibbelmann, Jobst

(56) References cited:
- EP-A- 1 035 126
- US-A- 5 986 124
- US-A- 5 994 573
- US-A- 6 048 994
- CHEMICAL ABSTRACTS, vol. 98, no. 7, 14 February 1983 (1983-02-14) Columbus, Ohio, US; abstract no. 54195, SVOBODA, P.ET AL.: "3-cyclohexylethyl-substituted chloro- and akoxysilanes" XP002157766 & CS 195 549 A (SVOBODA, P. ET AL.)
- DATABASE WPI Section Ch, Week 197501 Derwent Publications Ltd., London, GB; Class E11, AN 1975-01060W XP002157768 & SU 415 268 A (BELYAKOVA Z V ET AL), 1 July 1974 (1974-07-01)
- CHEMICAL ABSTRACTS, vol. 132, no. 26, 26 June 2000 (2000-06-26) Columbus, Ohio, US; abstract no. 347727, TACHIKAWA, M. ET AL.: "preparation of hydrocarbonoxysilyl group containing compounds by hydrosilylation" XP002157767 & JP 2000 143679 A (DOW CORNING ASIA LTD, JAPAN) 26 May 2000 (2000-05-26)

## Description

### Background of the Invention

The hydrosilation reaction, i.e., the addition of the silicon and hydrogen fragments of a hydrosilicon compound across an unsaturated site, usually a carbon-carbon double bond, is well known in organosilicon chemistry, including commercial practice in large scale equipment. In many cases, hydrosilation is accompanied by numerous side reactions, generating by-products which are contaminants or become waste streams. These include both side reactions of the concerned unsaturated site, such as reduction, isomerization, and polymerization, as well as side reactions of some other functional group in the unsaturated reactant, such as elimination, rearrangement, isomerization, or polymerization, and side reactions of the hydrosilane reactants, primarily rearrangements and disproportionations.

There is thus a constant economic and environmental need to improve selectivities, rates, and efficiencies for said hydrosilation reactions in terms of increasing production levels from fixed capital equipment, reducing waste loads and costs of disposing of wastes, reducing unit costs of hydrosilation products to better compete by either increasing profits or reducing customer prices, or simplifying processes to eliminate by-product removal steps.

For example, hydrosilations of allyl chloride have been practiced commercially for more than thirty years, with a highly selective, rapid, and efficient process having been discovered only recently (U.S. Patent No. 5,559,264).

The need for improvement of hydrosilation reactions also applies to a simpler class of products, the alkylalkoxysilanes, as derived from hydrosilation reactions between olefinic hydrocarbons, generally 1-alkenes, and hydroalkoxysilanes, i.e., silanes containing one silicon-bonded hydrogen atom, and at least one silicon-bonded alkoxy group. This is particularly so since alkylalkoxysilanes can be made by reactions of alcohols with alkylchlorosilanes, the latter being made by hydrosilations of alkenes with hydrochlorosilanes. There is an industry-wide move away from hydrochlorosilanes to the extent possible due to the inherent shipping hazards and the availability of technology to produce certain hydroalkoxysilanes directly from alcohols and silicon metal, without involving the more hazardous hydrochlorosilanes as intermediates..

It is known that alkylalkoxysilanes can be prepared by hydrosilation reactions between 1-alkenes and hydroalkoxysilanes, but earlier methods are generally subject to one or more deficiencies regarding low rates, selectivities, or efficiencies. For example, a process disclosed in U.S. Patent No. 3,271,362 lists a yield of 82% of octyltriethoxysilane using a large excess of 1-octene and a reaction scheme involving subambient temperature and about 15 hours of reaction time. Patent document SU-415268 discloses the use of acids, e.g. acetic acid, as hydrosilation promotor in reaction of allylamine with triethoxysilane.

### Summary of the Invention

The present invention provides processes for the preparation of alkylalkoxysilanes by the general equation shown, 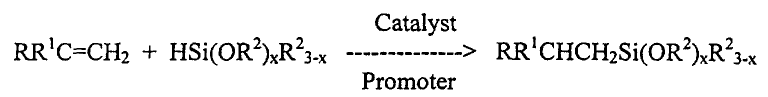 wherein R is a monovalent hydrocarbon radical of 1 to 16 carbon atoms, optionally containing one or more aryl groups of 6 to 10 carbon atoms; R¹ is hydrogen, a monovalent hydrocarbon radical of 1 to 3 carbon atoms, or an aryl radical of 6 to 10 carbon atoms; R² is a monovalent hydrocarbon radical of 1 to 3 carbon atoms, or an aryl radical of 6 to 10 carbon atoms, where R, R¹, and R² may vary within a reactant molecule or mixture of molecules; and x is an integer of 1 to 3.

Such processes essentially comprise the reaction between at least one unsaturated hydrocarbon RR¹C=CH₂ and at least one hydroalkoxysilane HSi(OR²)ₓR²₃₋ₓ in the presence of an effective amount of a hydrosilation catalyst for the reaction and an effective amount of an acidic hydrosilation promoter for the reaction, wherein the majority (i.e., at least 50 mole %) of the unsaturated hydrocarbon reactant is added to an excess of the hydroalkoxysilane reactant as present in the reactor, under effective reaction conditions of temperature, agitation, inert atmosphere, and pressure, followed by purification of the product, as by stripping, distillation, neutralization, filtration, centrifugation, decolorization, or combinations thereof.

### Detailed Summary of the Invention

It has been found that this mode of reactant combination, i.e., addition of the olefinic reactant to the hydroalkoxysilane reactant, provides the highest selectivities and rates, as well as the highest catalyst efficiencies, than other modes of reactant combination, especially in the required presence of an acidic hydrosilation promoter.

The hydrocarbon olefin, RR¹C=CH₂, may be exemplified by the linear terminal olefins or 1-alkenes, such as propylene, 1-butene, 1-pentene, 1-hexene, 1-heptene, 1-octene, 1-octadecene, and the like, and the terminal branched olefins, such as isobutylene (2-methylpropene), 2-methyl-1-butene, 2-methyl-1-pentene, 2-ethyl-1-butene, t-butylethylene (3,3-dimethyl-1-butene), diisobutylene (2,4,4-trimethyl-1-pentene), styrene, alphamethylstyrene, and the like. Linear or branched terminal olefins of 6 to 12 carbon atoms are preferred, including the isomeric octenes, with 1-octene being most preferred. It is recognized that commercially available 1-alkenes such as 1-octene may contain lesser amounts of octene isomers and even 6- and 10-carbon 1-alkenes as impurities, and that a mixture of products may be obtained. In general, an equimolar or slight excess of the hydrocarbon olefin relative to the hydroalkoxysilane is used in the present invention, primarily to ensure consumption of the hydroalkoxysilane. An excess is not an inventive requirement of the present invention, however, and a ratio of olefin to hydrosilane of 0.8 to 1.5 may be used.

The hydroalkoxysilane reactant, HSi(OR²)ₓR²₃₋ₓ, contains one silicon-bonded hydrogen atom and at least one silicon-bonded alkoxy group (x is an integer of 1 to 3). Such hydroalkoxysilanes include trimethoxysilane, methyldimethoxysilane, dimethylmethoxysilane, the corresponding ethoxysilanes, phenyldiethoxysilane, and the like. The hydroalkoxysilanes containing three alkoxy groups are preferred, such as trimethoxysilane and triethoxysilane, wih triethoxysilane being most preferred. The hydroalkoxysilanes are made and used commercially by various manufacturers of organosilicon compounds, using known processes. They have limited use as articles of commerce due to hazardous properties, including toxicity and reactivity, and are used primarily as intermediates at their manufacturing locations.

The hydrosilation catalyst may be one of many well known in the art, including complexes, covalent compounds, and salts of transition metals or noble metals, and solutions thereof. Noble metal catalysts are preferred due to higher activity at lower concentrations, particularly those containing platinum, such as chloroplatinic acid, platinum acetylacetonate, and platinum-vinylsiloxane complexes. A platinum catalyst comprising a complex of platinum with 1,3-divinyl-1,1,3,3-tetramethyldisiloxane, as commercially available from several suppliers, is most preferred. The catalyst concentration may be in the range of 0.01 to 1,000 parts per million by weight of the combined reactants, depending on the particular catalyst. A range of 0.5 to 50 parts per million of the combined reactants is preferred for the platinum catalysts, with a most preferred range of 1 to 6 parts per million of the combined reactants for the complex of platinum with 1,3-divinyl-1,1,3,3-tetramethyldisiloxane.

The acidic promoter is an organic acid, preferably represented by the carboxylic acids RCO₂H, with R as defined above. Selection of the acidic promoter of the carboxylic acid type may be influenced by the relative volatility of the promoter and the hydrosilation product. For higher boiling products, a more volatile promoter is preferred, while for more volatile products, a higher boiling promoter may be desired. For the preferred products of the present invention, acetic acid is the most preferred promoter. Useful levels may be in the range of 0.01 to 2.0 wt-% (based on the weiht of the combined reactants), with 0.05 to 1.0 wt-% being preferred, and 0.05 to 0.5 wt-% being most preferred.

Catalyst and promoter may be introduced to the reactor separately or jointly with either or both reactants. Under optimum conditions, further addition of catalyst or promoter (recatalysis or repromotion) will not be necessary but is an option if optimum reaction conditions can not be maintained. When the reaction is completed, the promoter, such as acetic acid, can be removed by dilution of the product with alcohol (methanol for methoxysilanes, ethanol for ethoxysilanes, and the like) and removal of said alcohol with the acetic acid by stripping, for example. Final traces of acetic acid can be removed by neutralization, as with a small amount of sodium bicarbonate or similar basic agent, followed by filtration or centrifugation, optionally using a filter aid or decolorizing carbon.

The process of the present invention may be run under pressures ranging from below atmospheric to above atmospheric, depending in part on the reactants and the equipment, with atmospheric pressure or slightly above atmospheric being preferred. Temperature may range from ambient to 150°C, with a range of ambient to 120°C being preferred. A portion of the unsaturated hydrocarbon may be added to the hydroalkoxysilane containing the catalyst at a lower temperature, and heat applied until an exothermic reaction is noted, followed by addition of the remainder of the olefin, using the addition rate to maintain the desired reaction temperature.

The process of the present invention may be practiced in a wide variety of commercial production equipment, now available and in current use. Such equipment should have means for introducing the reactants into the reactor, agitation, heating and cooling, maintenance of an inert atmosphere (nitrogen or argon, for example), means of maintaining the reactants in the reactor by pressure or condensers, and means of purifying the products as by stripping, distillation, neutralization, filtration, centrifugation, decolorization, and the like. The process does not require the use of a solvent; the reaction product acts as a solvent as it forms.

### Examples

The following examples demonstrate the practice of the present invention but are not intended to limit the scope thereof. In the examples, the abbreviations g, ml, min, and hr represent gram, milliliter, minute, and hour, respectively. Temperatures are recorded in degrees Centigrade.

Comparative Example 1: Triethoxysilane added to 1-Octene using Chloroplatinic Acid Catalyst and Acetic Acid Promoter

In a 100 ml, 4-necked, standard taper joint round-bottomed flask fitted with thermocouple, magnetic stirrer, addition funnel, condenser, and nitrogen flow valves, were placed 25.9 g of 1-octene and 0.05 wt-% acetic acid (based on total reactant charge). The addition funnel was charged with 43.0 g of triethoxysilane. Chloroplatinic acid hexahydrate solution (10 wt-% in ethanol, 0.033 ml) was added to the 1-octene in the flask and heat applied to 118° where addition of triethoxysilane began. After 22 min, reaction temperature had dropped to 110°, indicating the catalyst had become inactive after about 40% of the triethoxysilane was added.

The above reaction was repeated, except that the triethoxysilane feed began at 90° and was completed in 45 min in the 86.4-92.5° range. Reaction rate was improved relative to the run above.

Comparative Example 2: Example 1 was repeated except that equimolar platinum was used in the form of a platinum acetylacetonate solution. Addition of triethoxysilane was completed in 114 min in a range of 116.4-122.5°. Reaction rate was slow and required heat input.

Comparative Example 3: The second reaction of Example 1 was repeated except that equimolar platinum as chloroplatinic acid solution was added both to the 1-octene in the flask and to the triethoxysilane in the addition funnel and no acetic acid was used. The addition was completed in 113 min after being recatalyzed three times (total Pt = 5X that of Example 1). Reaction rate was obviously poor.

Example 4: Example 1 was repeated except the 1-octene/acetic acid were placed in the addition funnel and added to the triethoxysilane/chloroplatinic acid in the flask over 48 min at 90-97.5°. The reaction was exothermic throughout the addition of 1-octene and proceeded at a higher rate than those of Examples 1-3.

Example 5: Example 2 was repeated except that the reactant combination mode was that of Example 4, i.e., 1-octene/acetic acid added to triethoxysilane/platinum acetylacetonate. Addition took 51 min at 89.1-97.4°. Reactivity was not as high as Example 4. When repeated at 118-121°, addition was completed in 40 min.

Example 6: Example 4 was repeated with double the platinum concentration. Addition took more than 4 hr and required repromotion with acetic acid twice (0.05 and 0.01 wt-% additions).

Example 7: Example 5 was repeated except that acetic acid was added to both the 1-octene and the triethoxysilane (0.23 wt-% total). Addition was complete in 45 min at 92.6-100.4° but required recatalysis once (2X Pt level of Example 5).

Example 8: Example 7 was repeated except that a 1,3-divinyl-1,1,3,3-tetramethyl-disiloxane complex of platinum was used at equimolar platinum level. Addition was completed in 37 min at 91-109°; recatalysis was not required. The reaction rate was higher than that of previous examples and was exothermic throughout the addition.

Example 9: Example 8 was repeated except that the triethoxysilane was added to the 1-octene portion containing the platinum catalyst. Addition required 111 min at 94.7-105.3°, with reaction rate clearly slower than Example 8.

Example 10: Example 8 was repeated with 1/3 the platinum catalyst concentration. The addition was completed in 41 min at 95-109.5°.

Example 11: Example 10 was repeated with 2/3 the platinum catalyst concentration. Addition was completed in 30 min at 93-107.2°.

Example 12: Example 11 was repeated with 2/3 the platinum catalyst concentration (about 1/7 that of Example 8). Addition was complete in 34 min at 93-106.5°, with reaction rate not significantly lower than that of Example 8.

Example 13: Example 10 was repeated except that a small portion of the 1-octene/acetic acid was added before the addition of the platinum catalyst and heating. The remainder of the addition was completed in 37 min at 99.6-108.7° after a clear exothermic reaction was noted from the first addition.

Example 14: Example 4 was repeated except that acetic acid was also added to the triethoxysilane. The addition was completed in 29 min at 90-103.4°, followed by a hold for 1 hr at 100°. The reaction was about 5% more complete than that of Example 4.

Examples 1-14 were all small scale laboratory screening runs intended to allow qualitative and chromatographic comparison of reaction rates and optimum reaction conditions. They were analyzed by gas chromatography only without purification of the product.

Example 15: Example 12 was repeated on an approximately eight times larger scale with 218.8 g of triethoxysilane containing 0.6 g of acetic acid in the reactor, 182.1 g of 1-octene (21% molar excess) containing 0.6 g of acetic acid in the addition funnel, with 0.06 g of the platinum catalyst of Example 8 and about 12 ml of the 1-octene from the addition funnel being added to the reactor before heating. Heat was applied, and an exotherm observed to 102°, when the remainder of the 1-octene was added over 6 hr at 99.8-100.9°. After a 50 min hold at 100°, the crude product contained 9.0% 1-octene and isomers, no triethoxysilane, 1.8% tetraethoxysilane, 84.7% octyltriethoxysilane, and 3.9% of higher boiling compounds. The crude product was diluted with ethanol, vacuum-stripped, treated with sodium bicarbonate and a filter aid, and filtered to provide product containing 0.5% other octyltriethoxysilane isomers, 96.2% n-octyltriethoxysilane (which is the yield based on triethoxysilane, uncorrected for minor transfer losses), and 3.2% higher boiling compounds.

Example 16: Example 15 was repeated twice with 1/2 the platinum catalyst concentration (approximately 1 part per million by weight of the combined reactants). Addition times averaged 6 hr and 20 min (380 min) at 99-112° with 1 or 2 hr holds and essentially identical results for the crude products, averaging 9.2% 1-octene/isomers, 0.04% triethoxysilane, 1.4% tetraethoxysilane, 85.7% octyltriethoxysilanes, and 3.0% higher boiling compounds.

Example 17: Example 16 was repeated except that 30 parts per million of platinum supplied as platinum acetylacetonate solution was used. An exotherm was noted and addition time was 345 min at 99-100°, with 1 hr hold at 100°. Analytical results were essentially identical to Example 16.

## Claims

1. A method for the preparation of alkylalkoxysilanes comprising reacting an unsaturated hydrocarbon with a hydroalkoxysilane in the presence of an effective amount of a hydrosilation catalyst and an effective amount of an acidic hydrosilation promoter, wherein the majority of the unsaturated hydrocarbon is added to a stoichiometric excess of hydroalkoxysilane in a reaction vessel.

2. The method of claim 1 wherein the alkylalkoxysilane is RR¹CHCH₂Si(OR²)ₓR²₃₋ₓ, the unsaturated hydrocarbon is a linear or branched terminal olefin RR¹C=CH₂, and the hydroalkoxysilane is HSi(OR²)ₓR²₃₋ₓ, wherein R is a monovalent hydrocarbon radical of 1 to 16 carbon atoms, optionally containing one or more aryl groups of 6 to 10 carbon atoms, R¹ is hydrogen, a monovalent hydrocarbon radical of 1 to 3 carbon atoms or an aryl radical of 6 to 10 carbon atoms, R² is a monovalent hydrocarbon radical of 1 to 3 carbon atoms or an aryl radical of 6 to 10 carbon atoms, R, R¹, and R² may vary within a reactant molecule, and x is an integer of 1 to 3.

3. The method of claim 1 wherein the molar ratio of the unsaturated hydrocarbon to the hydroalkoxysilane is 0.8 to 1.5, the addition of a majority of the unsaturated hydrocarbon to the hydroalkoxysilane occurs in a temperature range of ambient to 150°C, at or near atmospheric pressure.

4. The method of claim 1 wherein the hydroalkoxysilane is selected from the group consisting of trimethoxysilane, methyldimethoxysilane, dimethylmethoxysilane, triethoxysilane, methyldiethoxysilane, and dimethylethoxysilane.

5. The method of claim 1 wherein the hydrosilation catalyst is selected from the group consisting of transition metal and noble metal compounds and solutions thereof, is used at a level of 0.01 to 1,000 parts of metal per million parts by weight of the combined reactants.

6. The method of claim 1 wherein the acidic promoter is a carboxylic acid of the formula RCO₂H, wherein R is a monovalent hydrocarbon radical of 1 to 16 carbon atoms, optionally containing one or more aryl groups of 6 to 10 carbon atoms, is used at a level of 0.01 to 2.0 wt-% of the combined reactants.

7. The method of claim 6 wherein the hydrosilation catalyst is selected from the group consisting of chloroplatinic acid, platinum acetylacetonate, vinylsiloxane complexes of platinum, and solutions thereof, and is used at a level of 0.5 to 50 parts of platinum per million parts by weight of the combined reactants.

8. The method of claim 1 wherein the unsaturated hydrocarbon is 1-octene, the hydroalkoxysilane is triethoxysilane, the alkylalkoxysilane is n-octyltriethoxysilane, the platinum catalyst is a 1,3-divinyl-1,1,3,3-tetramethyldisiloxane complex of platinum used at a level of 1 to 6 parts of platinum per million parts by weight of the combined reactants, the acidic promoter is acetic acid used at a level of 0.05 to 0.5 wt-% of the combined reactants, the reaction is run at a temperature range of ambient to 120°C at or near atmospheric pressure.

9. The method of claim 1 further comprising purifying the alkylalkoxysilane product by one or more steps selected from the group consisting of: diluting with alcohol, stripping, distilling, neutralizing, decoloring, filtering, or centrifuging.

## Patentansprüche

1. Verfahren zur Herstellung von Alkylalkoxysilanen, umfassend das Umsetzen eines ungesättigten Kohlenwasserstoffs mit einem Hydroalkoxysilan in Anwesenheit einer wirksamen Menge eines Hydrosilylierungs-Katalysators und einer wirksamen Menge eines sauren Hydrosilylierungs-Promotors, wobei der größere Teil des ungesättigten Kohlenwasserstoffs zu einem stöchiometrischen Überschuss von Hydroalkoxysilan in einem Reaktionsgefäß gegeben wird.

2. Verfahren nach Anspruch 1, in dem das Alkoxysilan RR¹CHCH₂Si(OR²)ₓR²₃₋ₓ ist, der ungesättigte Kohlenwasserstoff ein lineares oder verzweigtes terminales Olefin RR¹C=CH₂ ist und das Hydroalkoxysilan HSi(OR²)ₓR²₃₋ₓ ist, worin R ein einwertiger Kohlenwasserstoffrest mit 1 bis 16 Kohlenstoffatomen ist, der gegebenenfalls eine oder mehrere Arylgruppen mit 6 bis 10 Kohlenstoffatomen enthält, R¹ Wasserstoff, ein einwertiger Kohlenwasserstoffrest mit 1 bis 3 Kohlenstoffatomen oder ein Arylrest mit 6 bis 10 Kohlenstoffatomen ist, R² ein einwertiger Kohlenwasserstoffrest mit 1 bis 3 Kohlenstoffatomen oder ein Arylrest mit 6 bis 10 Kohlenstoffatomen ist, R, R¹ und R² innerhalb eines Reaktantenmoleküls variieren können und x eine ganze Zahl von 1 bis 3 ist.

3. Verfahren nach Anspruch 1, in dem das Molverhältnis des ungesättigten Kohlenwasserstoffs zu dem Hydroalkoxysilan 0,8 bis 1,5 beträgt, die Zugabe eines größeren Teils des ungesättigten Kohlenwasserstoffs zu dem Hydroalkoxysilan in einem Temperaturbereich von Umgebung bis 150°C bei oder nahe Atmosphärendruck stattfindet.

4. Verfahren nach Anspruch 1, in dem das Hydroalkoxysilan ausgewählt ist aus der Gruppe bestehend aus Trimethoxysilan, Methyldimethoxysilan, Dimethylmethoxysilan, Triethoxysilan, Methyldiethoxysilan und Dimethylethoxysilan.

5. Verfahren nach Anspruch 1, in dem der Hydrosilylierungs-Katalysator ausgewählt ist aus der Gruppe bestehend aus Übergangsmetall- und Edelmetall-Verbindungen und deren Lösungen und in einer Menge von 0,01 bis 1000 Teilen Metall pro Million Teile bezüglich Gewicht der vereinigten Reaktanten verwendet wird.

6. Verfahren nach Anspruch 1, in dem der saure Promotor eine Carbonsäure der Formel RCO₂H ist, worin R ein einwertiger Kohlenwasserstoffrest mit 1 bis 16 Kohlenstoffatomen ist, der gegebenenfalls eine oder mehrere Arylgruppen mit 6 bis 10 Kohlenstoffatomen enthält, und in einer Menge von 0,01 bis 2,0 Gew.-% der vereinigten Reaktanten verwendet wird.

7. Verfahren nach Anspruch 6, in dem der Hydrosilylierungs-Katalysator ausgewählt ist aus der Gruppe bestehend aus Chlorplatinsäure, Platinacetylacetonat, Vinylsiloxan-Komplexen von Platin und deren Lösungen und in einer Menge von 0,5 bis 50 Teilen Platin pro Million Teile bezüglich Gewicht der vereinigten Reaktanten verwendet wird.

8. Verfahren nach Anspruch 1, in dem der ungesättigte Kohlenwasserstoff 1-Octen ist, das Hydroalkoxysilan Triethoxysilan ist, das Alkylalkoxysilan n-Octyltriethoxysilan ist, der Platin-Katalysator ein 1,3-Divinyl-1,1,3,3-tetramethyldisiloxan-Komplex von Platin ist, der in einer Menge von 1 bis 6 Teilen Platin pro Million Teile bezüglich Gewicht der vereinigten Reaktanten verwendet wird, der saure Promotor Essigsäure ist, die in einer Menge von 0,05 bis 0,5 Gew.-% der vereinigten Reaktanten verwendet wird, die Reaktion bei einer Temperatur im Bereich von Umgebung bis 120°C bei oder nahe Atmosphärendruck durchgeführt wird.

9. Verfahren nach Anspruch 1, weiter umfassend das Reinigen des Alkylalkoxysilan-Produkts durch einen oder mehrere Schritte, die ausgewählt sind aus der Gruppe bestehend aus: Verdünnen mit Alkohol, Strippen, Destillieren, Neutralisieren, Entfärben, Filtrieren oder Zentrifugieren.

## Revendications

1. Procédé de préparation d'alkylalcoxysilanes comprenant la réaction d'un hydrocarbure insaturé avec un hydroalcoxysilane en présence d'une quantité efficace d'un catalyseur d'hydrosilation et d'une quantité efficace d'un promoteur d'hydrosilation acide, dans lequel la majorité de l'hydrocarbure insaturé est ajoutée en excès par rapport à la stoechiométrie de l'hydroalcoxysilane dans le réacteur.

2. Procédé selon la revendication 1, dans lequel l'alkylalcoxysilane répond à la formule RR¹CHCH₂Si(OR²)ₓR²₃₋ₓ, l'hydrocarbure insaturé est une oléfine terminale linéaire ou ramifiée RR¹C=CH₂ et l'hydroalcoxysilane répond à la formule HSi(OR²)ₓR²₃₋ₓ, où R est un radical hydrocarboné monovalent de 1 à 16 atomes de carbone, contenant éventuellement un ou plusieurs groupes aryle de 6 à 10 atomes de carbone, R¹ est un atome d'hydrogène, un radical hydrocarboné monovalent de 1 à 3 atomes de carbone ou un radical aryle de 6 à 10 atomes de carbone, R² est un radical hydrocarboné monovalent de 1 à 3 atomes de carbone ou un radical aryle de 6 à 10 atomes de carbone, R, R¹ et R² peuvent varier au sein d'une molécule de réactif, et x est un nombre entier de 1 à 3.

3. Procédé selon la revendication 1, dans lequel le rapport molaire de l'hydrocarbure insaturé à l'hydroalcoxysilane est de 0,8 à 1,5, l'addition de la majorité de l'hydrocarbure insaturé à l'hydroalcoxysilane a lieu dans une gamme de températures de la température ambiante à 150°C, à ou à proximité de la pression atmosphérique.

4. Procédé selon la revendication 1, dans lequel l'hydroalcoxysilane est choisi dans le groupe constitué par le triméthoxysilane, le méthyldiméthoxysilane, le diméthylméthoxysilane, le triéthoxysilane, le méthyldiéthoxysilane et le diméthyléthoxysilane.

5. Procédé selon la revendication 1, dans lequel le catalyseur d'hydrosilation est choisi dans le groupe constitué par les composés de métaux de transition et de métaux nobles et les solutions de ceux-ci, et il est utilisé dans une quantité de 0,01 à 1 000 parties de métal par million de parties en poids des réactifs combinés.

6. Procédé selon la revendication 1, dans lequel le promoteur acide est un acide carboxylique de formule RCO₂H, dans laquelle R est un radical hydrocarboné monovalent de 1 à 16 atomes de carbone, contenant éventuellement un ou plusieurs groupes aryle de 6 à 10 atomes de carbone, et il est utilisé dans une quantité de 0,01 à 2,0 % en poids des réactifs combinés.

7. Procédé selon la revendication 6, dans lequel le catalyseur d'hydrosilation est choisi dans le groupe constitué par l'acide chloroplatinique, l'acétylacétonate de platine, les complexes de vinylsiloxane de platine et les solutions de ceux-ci, et est utilisé dans une quantité de 0,5 à 50 parties de platine par million de parties en poids des réactifs combinés.

8. Procédé selon la revendication 1, dans lequel l'hydrocarbure insaturé est le 1-octène, l'hydroalcoxysilane est le triéthoxysilane, l'alkylalcoxysilane est le n-octyltriéthoxysilane, le catalyseur au platine est un complexe de 1,3-divinyl-1,1,3,3-tétraméthyldisiloxane du platine utilisé dans une quantité de 1 à 6 parties de platine par million de parties en poids des réactifs combinés, le promoteur acide est l'acide acétique utilisé dans une quantité de 0,05 à 0,5 % en poids des réactifs combinés, et la réaction est réalisée dans une gamme de températures de la température ambiante à 120°C, à ou à proximité de la pression atmosphérique.

9. Procédé selon la revendication 1, comprenant en outre la purification de l'alkylalcoxysilane produit par une ou plusieurs étapes choisies dans le groupe constitué par : la dilution avec un alcool, l'entraînement, la distillation, la neutralisation, la décoloration, la filtration ou la centrifugation.
